# FASCICULE DE BREVET EUROPEEN

(11) **EP 0 650 662 B1**
(45) Date de publication et mention de la délivrance du brevet: **03.03.1999**
(21) Numéro de dépôt: 94402368.8
(22) Date de dépôt: 21.10.1994
(51) Int. Cl.: A01D 19/16, A01D 33/10, A01D 27/00

(54) **Arracheuse-chargeuse de betteraves ou autres tubercules**
Erntemaschine für Rüben oder andere Wurzelpflanzen
Harvester for beet or other root crops

(30) Priorité: 27.10.1993 FR 9312802
(43) Date de publication de la demande: 03.05.1995
(73) Titulaire: Matrot, Jean-Paul, F-60480 Froissy (FR); Matrot, Louis, F-60480 Froissy (FR)
(72) Inventeur: Matrot, Jean-Paul, F-60480 Froissy (FR); Matrot, Louis, F-60480 Froissy (FR)
(74) Mandataire: Laget, Jean-Loup

(56) Documents cités:
- EP-A- 0 406 953
- DE-A- 2 721 125
- DE-A- 3 005 597
- FR-A- 1 376 101
- FR-A- 2 415 423

## Description

L'invention est relative à une arracheuse-chargeuse de betteraves ou autres tubercules.

Il est connu, pour assurer la récolte des tubercules, d'utiliser des machines auto-motrices de grande capacité qui récoltent en continu les tubercules sur une largeur de six rangs et les déversent sur des remorques circulant à proximité immédiate de la machine auto-motrice, soit directement, soit par l'intermédiaire d'une trémie.

La tendance actuelle est à l'augmentation de la capacité de ces machines et en particulier à l'augmentation des moyens de chargement et de stockage de ces machines, de manière à accroître leur autonomie. L'augmentation des moyens de stockage, c'est-à-dire l'évolution vers des trémies de grande capacité de l'ordre de 15 tonnes de tubercules, augmente le poids total de la machine et par conséquent augmente la pression au sol exercée par ces machines automotrices. L'augmentation de la pression au sol étant néfaste pour la bonne tenue des terrains de culture, on remédie à cet inconvénient en utilisant des roues comportant des pneumatiques de largeur de l'ordre de 75cm à 1m.

La largeur totale des machines est imposée par la largeur de travail qui est fonction du nombre de rangs de betteraves récoltés simultanément. Usuellement une machine récolte 6 rangs, ce qui implique une largeur de l'ordre de 2,70 à 3m. En conséquence, la largeur disponible entre les roues pour acheminer les betteraves ramassées est limitée, d'autant plus que les roues sont motrices et directrices.

Par ailleurs, les arracheuses-chargeuses de betteraves utilisent pour récupérer les betteraves à la sortie des organes d'arrachage, soit des disques de grand diamètre, de l'ordre de 1,5m, peu inclinés sur le plan horizontal, soit des rouleaux.

Les rouleaux, disposés transversalement à l'axe de la machine, permettent de transporter les betteraves vers l'axe de la machine et vers l'arrière. Ils présentent un inconvénient dû à leur diamètre. En effet, les socs arracheurs des betteraves doivent non seulement extraire les betteraves du sol mais aussi les faire remonter au dessus du sol d'une hauteur au moins égale au diamètre des rouleaux pour permettre leur acheminement par les rouleaux.

Pour éviter cet inconvénient, on utilise des disques de grand diamètre, dénommés usuellement turbines, dont l'épaisseur est réduite, et qui n'exigent pas de faire remonter les betteraves autant que dans le cas des rouleaux.

Les turbines, qui tournent en sens inverse, regroupent les betteraves dans l'axe de la machine où elles doivent être reprises par un transporteur. En effet, il n'est pas possible de les acheminer entre les roues de la machine au moyen d'une ou plusieurs autres turbines en raison de la largeur disponible limitée entre les roues. Le transporteur utilisé est alors du type tapis transporteur sans fin, dont l'encombrement vertical est tel qu'il ne peut être inséré sous les turbines.

Le problème technique qui se pose alors est lié au caractère circulaire des turbines : entre les turbines et le tapis transporteur se trouve un espace en forme de triangle curviligne dans lequel il est nécessaire de prévoir un dispositif de reprise des betteraves en provenance des turbines, en vue de leur transfert sur le tapis.

Le but de l'invention est de proposer un tel dispositif de reprise des betteraves, qui soit susceptible d'une part de s'insérer sous la partie arrière des turbines et dans l'espace libre entre le bord arrière des turbines, et d'autre part de se raccorder au bord avant du tapis transporteur.

Des machines de ce type utilisant des rouleaux de ramassage des betteraves sont décrites dans les documents DE-A-30 05 597 et EP-A-0 406 953.

L'invention a pour objet une arracheuse-chargeuse automotrice de betteraves ou autres tubercules, du type comportant de l'avant vers l'arrière : des organes d'effeuillage, des organes d'arrachage, des organes de reprise du genre turbine assurant par leur rotation le nettoyage et le convoyage vers l'arrière des betteraves, des roues motrices et directrices de grande largeur, entre les roues avant un tapis transporteur, et en arrière du tapis transporteur des moyens de reprise des betteraves pour les acheminer vers une trémie de grande capacité, caractérisée en ce qu'elle comporte, entre les deux turbines de reprise des betteraves et le tapis transporteur, un ensemble de rouleaux recevant les betteraves des deux turbines et les convoyant au tapis transporteur, cet ensemble étant susceptible d'une part de s'insérer sous la partie arrière des turbines et dans l'espace libre entre le bord arrière des turbines, et d'autre port de se raccorder au bord avant du tapis transporteur.

Selon d'autres caractéristiques de l'invention :
- les rouleaux sont placés transversalement, c'est-à-dire avec leur axe de rotation transversal à la direction de travail ;
- les rouleaux sont placés longitudinalement, c'est-à-dire avec leur axe de rotation sensiblement voisin de la direction de travail ;
- au moins un rouleau est un rouleau concentrateur et présente une surface extérieure agissant sur les tubercules pour les concentrer au milieu de ce rouleau ;
- la longueur des rouleaux est décroissante vers l'avant.

L'invention sera mieux comprise grâce à la description qui va suivre, donnée à titre d'exemple non limitatif au regard des dessins annexés dans lesquels :
La Figure 1 représente une vue schématique de dessus de la partie avant d'une arracheuse-chargeuse selon l'invention ;
La Figure 2 représente une vue partielle agrandie de dessus d'une arracheuse-chargeuse selon l'invention ;
La Figure 3 représente une vue en élévation et en coupe longitudinale selon la ligne III-III de la figure 2 ;
La Figure 4 représente une vue schématique de dessus d'une autre arracheuse-chargeuse selon l'invention ;
La Figure 5 représente une vue en coupe longitudinale et en élévation selon les lignes V-V de la figure 4.

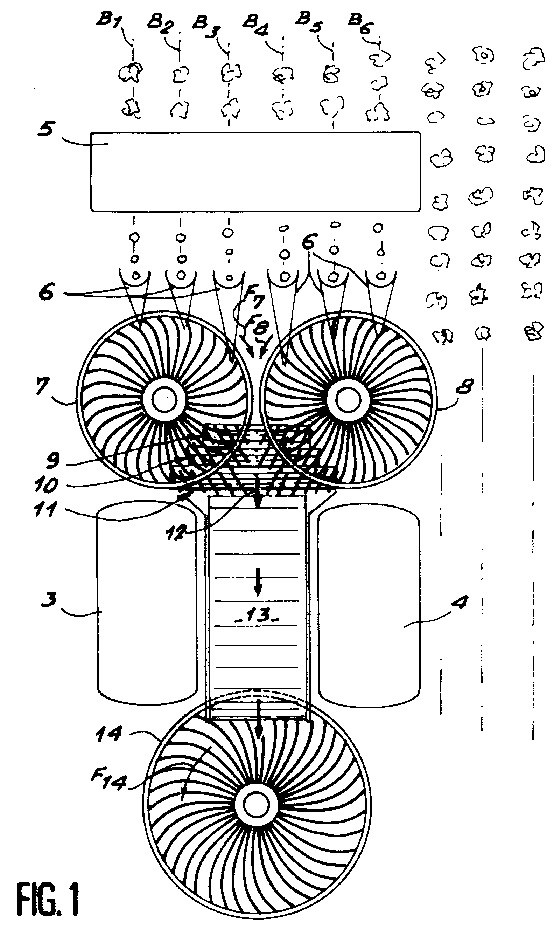

En référence à la figure 1, une arracheuse-chargeuse de betteraves est représentée schématiquement par ses organes fonctionnels, le châssis et la structure mécanique générale n'étant pas représentés par souci de clarté.

L'arracheuse-chargeuse de betteraves comporte deux roues avant 3, 4 de grande largeur et des roues arrière non représentées. Elle peut circuler dans un champ de betteraves en récoltant six rangs B1 à B6 de betteraves simultanément dans l'exemple représenté. La machine automotrice comporte à l'avant des moyens d'effeuillage 5 de type connu en soi supprimant la majeure partie des fanes de tubercules. En arrière des moyens d'effeuillage 5 par rapport à la direction de travail, la machine auto-motrice comporte des socs, disques ou autres moyens d'arrachage 6 soulevant les betteraves sensiblement au dessus du niveau du sol. Les betteraves arrachées sont reprises par une paire de turbines 7, 8 entraînées en rotation par exemple dans le sens des flèches F7, F8 respectivement, c'est-à-dire de manière contra-rotative correspondant à un engagement central des betteraves dans l'espace entre les deux turbines 7 et 8. Le sens de rotation des turbines n'est pas impératif et il pourrait être inversé. On préfère utiliser selon l'invention, une paire de turbines 7, 8 connues pour assurer simultanément le nettoyage et le convoyage des tubercules, ce qui permet d'acheminer vers l'arrière de la machine des betteraves sans adhérence notable de mottes de terre.

Les deux turbines 7 et 8 déversent sur un ensemble de rouleaux, par exemple trois rouleaux 9, 10, 11 les betteraves qu'elles convoient. Le sens d'écoulement des betteraves symbolisé par la flèche 12 correspond au transport des tubercules dans l'espace intermédiaire entre les deux roues avant 3 et 4 de grande largeur, espace à l'intérieur duquel est placé un tapis transporteur 13. Le tapis transporteur 13 élève les betteraves d'une hauteur faible puis les déverse à son tour par exemple sur une troisième turbine 14 entraînée en rotation dans le sens de la flèche F14 ou dans le sens inverse. En sortie de la turbine 14, les betteraves sont reprises et arrivent dans la trémie de grande capacité de la machine.

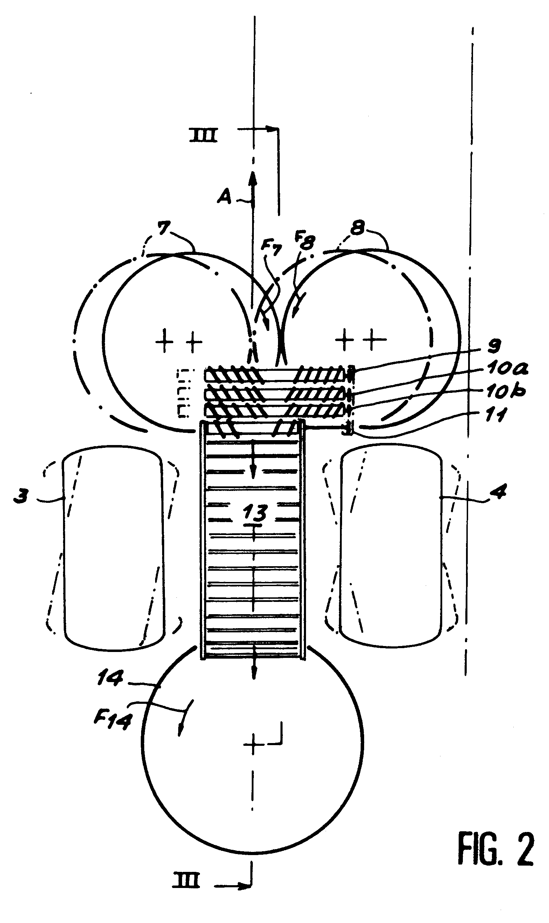

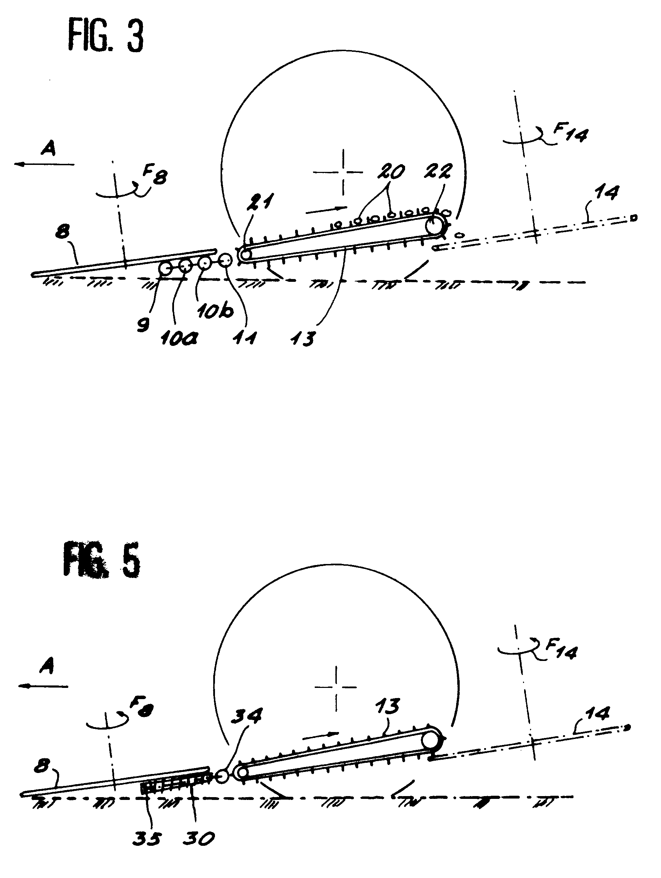

En référence aux figures 2 et 3, les repères identiques à ceux de la figure 1, désignent des éléments identiques ou similaires aux éléments de la figure 1.

Les turbines 7 et 8 entraînées dans un mouvement normal de contra-rotation convoient, tout en assurant leur nettoyage, les betteraves en direction des rouleaux 9, 10a, 10b, 11.

Les rouleaux 9, 10a, 10b sont entraînés latéralement par un système de transmission mécanique.

De préférence, la pluralité de rouleaux 9, 10a, 10b est montée solidaire des turbines 7 et 8, ce qui permet un déplacement latéral d'ensemble des turbines 7 et 8 et de la pluralité de rouleaux, 9, 10a, 10b depuis la position de travail représentée en traits pleins jusqu'à une position de dégagement représentée en traits pointillés.

Dans une variante de réalisation, le rouleau 11 le plus rapproché du tapis transporteur 13 présente de préférence une largeur sensiblement voisine de celle du tapis transporteur 13.

Les rouleaux 9, 10a, 10b, peuvent être de longueur égale ou de longueur décroissante vers l'avant.

Les rouleaux présentent de préférence une surface extérieure agissant sur les tubercules pour les concentrer au milieu de ces rouleaux : à cet effet, cette surface extérieure présente un profil correspondant à deux vis d'Archimède orientées en sens inverse l'une de l'autre en périphérie de chaque rouleau 9, 10a, 10b, 11.

Dans une autre variante de réalisation non représentée, les rouleaux 9, 10a, 10b déversent directement les betteraves sur le tapis 13.

Le tapis transporteur 13 est de préférence un tapis continu avec des barrettes transversales 20 évitant tout glissement en arrière des tubercules lors d'un arrêt de la bande transporteuse 13. L'entraînement de la bande transporteuse 13 est réalisé de manière connue par des moteurs hydrauliques ou autre moyen mécanique équivalent entraînant des pignons placés par exemple en 21 ou 22.

De ce fait, le tapis transporteur présente une largeur déterminée pour permettre aux roues avant directrices 3 et 4, de ne pas interférer dans leur mouvement représenté en traits pointillés avec le fonctionnement du tapis transporteur 13.

Grâce à l'invention, le convoyage des tubercules est ainsi assuré malgré l'utilisation de roues 3 et 4 de grande largeur tout en restant dans le gabarit requis par la largeur de travail.

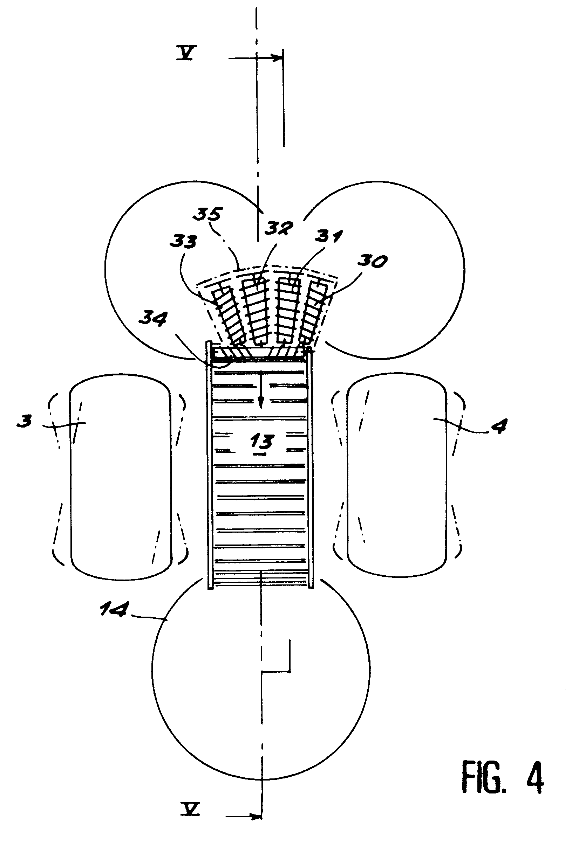

En référence aux figures 4 et 5, les éléments de repères identiques à ceux des figures 1 à 3 désignent des éléments similaires ou identiques à ceux des figures 1 à 3.

Dans ce deuxième mode de réalisation, des rouleaux 30, 31, 32, 33 sont disposés longitudinalement, c'est-à-dire avec leur axe de rotation sensiblement voisin de la direction de travail A. Les rouleaux 30 à 33 présentent des profils en vis d'Archimède, de manière à former deux veines parallèles de tubercules arrivant sur un rouleau 34 le plus rapproché du tapis transporteur 13 ou directement sur le tapis 13. Le rouleau 34 est muni de deux demi-vis d'Archimède orientées en sens contraire l'une et l'autre, de manière à faire converger les deux veines de tubercules vers le milieu du tapis transporteur 13. Dans cet exemple de réalisation, l'entraînement des rouleaux 30 à 33 est réalisé par un carter commun 35 dans lequel sont disposés des engrenages prévus dans un premier cas pour entraîner les rouleaux 30 et 31 en sens inverse l'un de l'autre et les rouleaux 32 et 33 en sens inverse l'un de l'autre, et dans un autre cas pour entraîner les rouleaux 30 et 31 dans le même sens et les rouleaux 32 et 33 dans un même sens, inverse de celui des rouleaux 30 et 31, de manière à regrouper les betteraves dans l'axe du tapis. Le nombre des rouleaux n'est pas limité à 4.

L'invention décrite par rapport à deux modes de réalisation n'y est nullement limitée, mais couvre au contraire toute modification de forme et toute variante de réalisation dans le cadre et dans l'esprit de l'invention.

L'essentiel est que le triangle curviligne situé en arrière des turbines 7 et 8 ne présente aucun espace vide mais soit au contraire complètement couvert par la zone d'action des rouleaux placés sous les turbines 7 et 8 : en raison des dimensions pratiques générales, on comprend ainsi que le diamètre de ces rouleaux est faible comparativement au diamètre des turbines 7 et 8.

## Revendications

1. Arracheuse-chargeuse automotrice de betteraves ou autres tubercules, du type comportant de l'avant vers l'arrière : des organes d'effeuillage, des organes d'arrachage, des organes de reprise du genre turbine assurant par leur rotation le nettoyage et le convoyage vers l'arrière des betteraves, des roues motrices et directrices de grande largeur, entre les roues avant un tapis transporteur, et en arrière du tapis transporteur des moyens de reprise des betteraves pour les acheminer vers une trémie de grande capacité, caractérisée en ce qu'eue comporte, entre les deux turbines (7, 8) de reprise des betteraves et le tapis transporteur (13), un ensemble de rouleaux recevant les betteraves des deux turbines (7, 8) et les convoyant au tapis transporteur (13), cet ensemble étant susceptible d'une part de s'insérer sous la partie arrière des turbines et dans l'espace libre entre le bord arrière des turbines, et d'autre part de se raccorder au bord avant du tapis transporteur.

2. Arracheuse-chargeuse selon la revendication 1, caractérisée en ce que les rouleaux (9, 10a, 10b, 10, 11) sont placés transversalement, c'est-à-dire avec leur axe de rotation transversal à la direction de travail (A).

3. Arracheuse-chargeuse selon la revendication 1, caractérisée en ce que les rouleaux (30-33) sont placés longitudinalement, c'est-à-dire avec leur axe de rotation sensiblement voisin de la direction de travail (A).

4. Arracheuse-chargeuse selon la revendication 1, caractérisée en ce que au moins un rouleau (9, 10a, 10b, 11 ; 34) est un rouleau concentrateur et présente une surface extérieure agissant sur les tubercules pour les concentrer au milieu de ce rouleau.

5. Arracheuse-chargeuse selon la revendication 2, caractérisée en ce que la longueur des rouleaux est décroissante vers l'avant.

## Claims

1. A self-propelled harvester for beetroot or other tubers, of the type comprising, from front to back:
leaf-removing elements, beet-lifting elements, takeup elements of the turbine type which clean and convey the beetroot to the rear by rotating, driving and guiding wheels of great width, between the front wheels a conveyor belt, and at the rear of the conveyor belt means for taking up the beetroot to convey them towards a large-capacity hopper, characterised in that it comprises, between the two turbines (7, 8) for taking up the beetroot and the conveyor belt (13), a set of rollers which receive the beetroot from the two turbines (7, 8) and convey them to the conveyor belt (13), this unit being capable of firstly being inserted beneath the rear part of the turbines and in the free space between the rear edges of the turbines, and secondly being connected to the front edge of the conveyor belt.

2. A harvester according to Claim 1, characterised in that the rollers (9, 10a, 10b, 10, 11) are placed transversely, that is to say, with their axes of rotation transversely to the working direction (A).

3. A harvester according to Claim 1, characterised in that the rollers (30-33) are placed longitudinally, that is to say, with their axes of rotation substantially close to the working direction (A).

4. A harvester according to Claim 1, characterised in that at least one roller (9, 10a, 10b, 11; 34) is a concentrator roller and has an outer surface which acts on the tubers to concentrate them in the centre of this roller.

5. A harvester according to Claim 2, characterised in that the length of the rollers decreases towards the front.

## Patentansprüche

1. Motorgetriebene Erntemaschine für Rüben oder andere Wurzelpflanzen eines Typs, der von vorne nach hinten aufweist:
Organe zur Blätterentfernung, Organe zum Roden, turbinenartige Organe zum Aufnehmen, die durch ihre Rotation das Säubern und den Transport der Rüben nach hinten sicherstellen, angetriebene und gelenkte Räder großer Breite, ein Förderband zwischen den Vorderrädern, und im hinteren Bereich des Förderbandes Mittel zur Wiederaufnahme der Rüben, um diese zu einem Vorratsbunker großer Kapazität zu befördern, dadurch gekennzeichnet, daß sie, zwischen den zwei Turbinen (7,8) zur Aufnahme der Rüben und dem Förderband (13), eine Anordnung von Trommeln aufweist, die die Rüben von den beiden Turbinen (7,8) erhält und diese auf das Förderband (13) transportiert, wobei diese Anordnung geeignet ist, sich einerseits unter den hinteren Teil der Turbinen und in den freien Zwischenraum zwischen dem hinteren Rand der Turbinen einzufügen und andererseits, sich an den vorderen Rand des Förderbandes anzuschließen.

2. Erntemaschine nach Anspruch 1, dadurch gekennzeichnet, daß die Trommeln (9,10a,10b,10,11) quer angeordnet sind, d. h. mit ihrer Rotationsachse quer zu der Arbeitsrichtung (A).

3. Erntemaschine nach Anspruch 1, dadurch gekennzeichnet, daß die Trommeln (30 bis 33) längs angeordnet sind, d. h. mit ihrer Rotationsachse etwa parallel zu der Arbeitsrichtung (A).

4. Erntemaschine nach Anspruch 1, dadurch gekennzeichnet, daß mindestens eine Trommel (9,10a,10b,11 ; 34) eine Konzentrator-Trommel ist und eine äußere Oberfläche aufweist, die auf die Wurzelpflanzen einwirkt, um diese in der Mitte dieser Trommel zu konzentrieren.

5. Erntemaschine nach Anspruch 2, dadurch gekennzeichnet, daß die Länge der Trommeln nach hinten abnehmend ist.
